# EUROPÄISCHE PATENTSCHRIFT

(11) **EP 3 360 671 B1**
(45) Veröffentlichungstag und Bekanntmachung des Hinweises auf die Patenterteilung: **20.07.2022**
(21) Anmeldenummer: 18156188.7
(22) Anmeldetag: 09.02.2018
(51) Int. Cl.: B29C 70/54, B29C 70/30, B29D 99/00, B29C 31/08, B29C 70/38, B29L 31/08

(54) **DREHBARE TEILVORFORM FÜR EINEN PREFORM**
ROTATABLE PRE-MOULD FOR A PREFORM
PRÉ-MOULE ROTATIF POUR UNE PRÉFORME

(30) Priorität: 14.02.2017 DE 102017001403
(43) Veröffentlichungstag der Anmeldung: 15.08.2018
(73) Patentinhaber: Siemens Gamesa Renewable Energy Service GmbH, 20097 Hamburg (DE)
(72) Erfinder: BENDEL, Urs, 24787 Fockbek (DE); WERNER, Markus, 24242 Felde (DE); RAMM, Julian, 24105 Kiel (DE); ZELLER, Lenz, 24242 Felde (DE); EICHLER, Karl, 24966 Sörup (DE)
(74) Vertreter: Groth, Wieland

(56) Entgegenhaltungen:
- WO-A1-2010/097657
- DE-A1-102011 078 951
- US-A1- 2012 251 654

## Beschreibung

Die Erfindung betrifft ein Verfahren zur Herstellung einer Rotorblattteilschale. Die Erfindung betrifft auch eine Herstellungsanordnung zur Durchführung eines Verfahrens zur Herstellung einer Rotorblattteilschale.

Rotorblätter sind Schalenbauteile, üblicherweise Laminatbauteile, die vorzugsweise aus zwei Halbschalen zusammengefügt werden. Die beiden Halbschalen können separat voneinander hergestellt werden und nach ihrer Fertigstellung miteinander verbunden, z. B. verklebt werden.

Zur Herstellung von Rotorblatthalbschalen werden Halbformen verwendet. Problematisch an den Halbformen ist, dass diese vor allem im Bereich der Blattwurzel und im daran angrenzenden Bereich an der aerodynamischen Vorder- und Hinterkante, also dem Bereich, der der Rotorblattnase bzw. der Rotorblatthinterkante entspricht, sehr steile Auflageflächen aufweisen. Die Auflageflächen können Steigungen von beinahe oder sogar exakt 90° gegenüber dem Erdboden aufweisen. Zur Herstellung der Rotorblatthalbschalen werden auf die Auflageflächen verschiedene Faserlagen, bspw. Gewebe- oder Gelegelagen, und/oder Sandwich-Kernwerkstoffe wie beispielsweise Schäume und/oder Balsa, übereinandergeschichtet. Da dieses Übereinanderschichten im trockenen Zustand der Gewebe- und Gelegelagen erfolgt, verrutschen die Gewebe- und Gelegelagen leicht, insbesondere an den steilen Stellen der Halbform. Die Lagen müssen daher mittels Fixiermitteln relativ zueinander und an der Form fixiert werden. Es ist bspw. möglich und wird auch durchgeführt, die Lagen mittels eines Klebstoffs provisorisch miteinander zu verkleben, jedoch ist das sehr aufwendig.

WO 2010/097657 A1 offenbart ein Verfahren zur Herstellung einer Rotorblattteilschale gemäß dem Oberbegriff des Anspruchs 1.

Es ist daher Aufgabe der vorliegenden Erfindung, ein Verfahren zur Herstellung einer Rotorblattteilschale zur Verfügung zu stellen, das die oben genannten Nachteile vermeidet oder zumindest verringert. Es ist in einem zweiten Aspekt Aufgabe der vorliegenden Erfindung, eine Herstellungsanordnung zur Durchführung eines solchen Verfahrens zur Verfügung zu stellen.

Die Aufgabe wird in ihrem ersten Aspekt durch ein Verfahren mit den Merkmalen des Anspruchs 1 gelöst.

Zunächst werden eine Teilvorform mit einer Vorauflagefläche und eine Herstellungsform mit einer Auflagenfläche für die Rotorblattteilschale zur Verfügung gestellt. Die Teilvorform mit ihrer Vorauflagefläche wird in eine erste Lage gebracht, in der die Vorauflagefläche horizontal ausgerichtet ist. Unter "horizontal" ist dabei zu verstehen, dass die größte Steigung der Vorauflagefläche gegenüber dem Erdboden höchstens 50°, vorzugsweise höchstens 40°, besonders bevorzugt höchstens 30° oder jede andere zwischen den genannten Gradzahlen befindliche Gradzahl beträgt. Es ist also nicht erforderlich, dass jeder Punkt der Vorauflagefläche eine horizontale Steigung aufweist, es reicht wenn nur einige Punkte der Vorauflagefläche horizontal ausgerichtet sind. Es braucht im Grunde aber auch gar kein Punkt exakt horizontal ausgerichtet zu sein. Es ist allerdings erforderlich, dass die Vorauflagefläche insgesamt und an jeder Stelle weitestgehend horizontal im oben genannten Sinne angeordnet ist.

Auf der vorzugsweise im Wesentlichen horizontal ausgerichteten Vorauflagefläche wird ein Preform hergestellt.

Bei einem Preform handelt es sich um ein vorabgefertigtes Bauteil für die Rotorblatthalbschale. Der Preform wird nach seiner Fertigung in die Rotorblattteilschale eingebaut. Der Preform ist ein Bauteil, das auf zwei unterschiedliche Arten hergestellt werden kann:
Variante A:
   1. Faserlagen werden mit einem Haftmittel, insbesondere aus einem Epoxidharz bestehend, welches sich bei Raumtemperatur in seiner festen Phase befindet, flächig beschichtet und bereitgestellt.
   2. Die mit einem Haftmittel beschichteten Faserlagen werden in der Teilvorform in der vorbestimmten Reihenfolge und Anzahl abgelegt. Zusätzlich können dabei auch Werkstoffe wie z. B. Schäume und/oder Balsaholz zwischen die Faserlagen eingelegt werden, die geeignet sind, zusammen mit den Faserlagen eine Sandwichstruktur zu bilden. Zusätzlich kann vorgesehen sein, dass zwischen die erste abgelegte Faserlage bzw. einen Sandwichwerkstoff und der Oberfläche der Teilvorform eine Folie gelegt wird, um das spätere Entformen des Preforms aus der Teilvorform zu erleichtern.
   3. Wenn alle Faserlagen und Sandwichwerkstoffe in der Teilvorform abgelegt sind, wird der Aufbau mit einer Folie abgedeckt, die dann entlang der Umrandung der Teilvorform vakuumdicht mit dieser verbunden wird, wobei mindestens ein Auslass vorgesehen wird, mit dessen Hilfe die vorhandene Luft aus dem Lagenaufbau des Preforms evakuiert werden kann.
   4. Evakuieren der Luft aus dem Lagenaufbau des Preforms in der Teilvorform, wobei ein Unterdruck von mindestens 80 % des Umgebungsdrucks erreicht wird.
   5. Aufheizen des Preforms in der Teilvorform mittels einer Heizvorrichtung auf eine Temperatur, die über dem Schmelzpunkt des Haftmittels liegt. Die Heizvorrichtung kann dabei in der Wandung oder Schale der Teilvorform integriert sein, sie kann unterhalb der Schale der Teilvorform angeordnet sein, die den Preform von unten erwärmt, und es können zusätzlich zu dieser Heizvorrichtung weitere Heizvorrichtungen auf der Oberseite des Preforms angeordnet werden.
   6. Abkühlen des Preforms nach einer vorbestimmten Zeit, die ausreicht, um alle Lagen in dem Preform miteinander zu verkleben.
   7. Entfernen der in Verfahrensschritt 3 eingebrachten Vakuumfolie.
Variante B:
   1. Sogenannte Prepregs, das sind Faserlagen, die bereits mit einem nicht ausgehärteten Harz-Härter-Gemisch getränkt sind, werden bereitgestellt.
   2. Die in Verfahrensschiritt 1 beschriebenen Faserlagen werden in der Teilvorform in der vorbestimmten Reihenfolge und Anzahl abgelegt. Zusätzlich können dabei auch Werkstoffe wie z. B. Schäume und/oder Balsaholz zwischen die Faserlagen eingelegt werden, die geeignet sind, zusammen mit den Faserlagen eine Sandwichstruktur zu bilden. Zusätzlich kann vorgesehen sein, dass zwischen die erste abgelegte Faserlage bzw. den Sandwichwerkstoff und die Oberfläche der Teilvorform eine Folie gelegt wird, um das spätere Entformen des Preforms aus der Teilvorform zu erleichtern.
   3. Wenn alle Faserlagen und Sandwichwerkstoffe in der Teilvorform abgelegt sind, wird der Aufbau mit einer Folie abgedeckt, die dann entlang der Umrandung der Teilvorform vakuumdicht mit dieser verbunden wird, wobei mindestens ein Auslass vorgesehen wird, mit dessen Hilfe die vorhandene Luft aus dem Lagenaufbau des Preforms evakuiert werden kann.
   4. Evakuieren der Luft aus dem Lagenaufbau des Preforms in der Teilvorform, wobei ein Unterdruck von mindestens 80 % des Umgebungsdrucks erreicht wird.
   5. Entfernen der in Verfahrensschritt 3 eingebrachten Vakuumfolie.

Anschließend wird die Teilvorform mit dem darin befindlichen Preform in eine zweite Lage verschwenkt, in der der Preform hinsichtlich seiner Drehstellung in seiner Endlage in der Herstellungsform entspricht. Die Teilvorform wird also mit dem in der Teilvorform vorgefertigten und in ihr vorhandenen Preform gedreht. Dabei kann eine oder es können mehrere Drehbewegungen grundsätzlich um alle drei Drehachsen erfolgen. Wesentlich ist jedoch, dass nach Abschluss des Dreh- bzw. Verschwenkvorganges der Preform eine Stellung im Raum hat, die der Stellung seiner Endlage in der Herstellungsform entspricht. Anschließend wird der Preform dann durch (rein) translatorische Bewegungen aus der zweiten Lage in der Teilvorform in eine Endlage in der Herstellungsform gebracht. Der Preform wird auf die Auflagefläche der Herstellungsform aufgelegt.

Der Kern der Erfindung liegt somit darin, dass zunächst einmal die steilen Stellen in der Herstellungsform während des Laminierverfahrens gemieden werden, indem diese Bereiche durch Herstellung von Preforms separat gefertigt werden. Der separat gefertigte Preform, der zur Vermeidung von steilen Bereichen in eine horizontale Lage gedreht wird, wird nach Herstellung des Preforms zurückverschwenkt. Jedoch erfolgt diese Schwenkbewegung erfindungsgemäß durch Verschwenken der Teilvorform selbst. Dadurch wird der Preform vollständig gestützt und geschützt verschwenkt. Erst nachdem der Preform seine hinsichtlich der Drehachsen Endlage erreicht hat, wird er mittels einer Translationseinrichtung, also einer kombinierten Hebe- und Verfahreinrichtung, aus der Teilvorform in die Herstellungsform herübergebracht.

Durch die Erfindung lassen sich Zykluszeiten zur Fertigung eines Rotorblattes deutlich verkürzen.

Vorzugsweise beträgt die maximale Steigung des größten Teils der Vorauflagefläche in der ersten Lage höchstens 50°, vorzugsweise höchstens 40°, besonders bevorzugt höchstens 30°. Vorzugsweise beträgt die maximale Steigung der Vorauflagefläche in der zweiten Lage mindestens 70°, vorzugsweise bis zu 90°. Es sind auch alle Zwischengradzahlen mitoffenbart. Auch in einer den Zwischengradzahlen befindlichen Steigung kann sich die Vorauflagefläche befinden.

Da der Preform in der ersten Lage gefertigt wird und ein Verrutschen der noch trockenen Lagen gegeneinander verhindert werden soll, müssen die maximalen Steigungen besonders gering sein. Nach Fertigstellung des Preforms kann eine Verschwenkung auch in eine sehr steile zweite Lage erfolgen. Das ist auch notwendig, da, insbesondere entlang der aerodynamischen Rotorblattvorderkante, aber auch entlang der Rotorblatthinterkante, bei Verwendung von Hinterkantenabschlussstegen senkrechte oder beinahe senkrechte Ausrichtungen des Preforms erforderlich sind.

Günstigerweise werden auf die Vorauflagefläche Lagen gelegt, die bereits mit einem Haftmittel, z. B. einem Harzpulver beschichtet sind, oder mit einem Harzpulver versehen und unter Wärmezufuhr miteinander verklebt werden. Dieses Verkleben der Lagen entsprechend der beschriebenen Variante A führt zur Fertigung des Preforms, der dann jedoch noch kein vollständig infundiertes Laminatbauteil ist. Der abschließende Laminiervorgang bzw. Aushärtevorgang für Preforms nach Variante B erfolgt hier erst nach Einlegen des Preforms in die Herstellungsform.

Vorzugsweise wird die Teilvorform um eine horizontale Achse verschwenkt. Es ist jedoch auch denkbar, dass die Teilvorform um eine anders ausgerichtete Achse, möglicherweise auch um mehrere Achsen nacheinander oder gleichzeitig, verschwenkt wird. Das hängt davon ab, wie die Teilvorform und die Herstellungsform relativ zueinander angeordnet sind.

Günstigerweise erfolgt die translatorische Bewegung derart, dass der Preform von der Auflagefläche der Teilvorform angehoben wird, danach über die Herstellungsform translatorisch verbracht wird und dann auf die Auflagefläche der Herstellungsform herabgelassen wird. Grundsätzlich sind jedoch nicht nur rein lineare Bewegungen, sondern auch bogenförmige Bewegungen denkbar, die sich aber aus rein translatorischen Komponenten zusammensetzen.

Vorzugsweise wird wenigstens eine weitere Teilvorform zur Verfügung gestellt, in der wenigstes ein weiterer Preform hergestellt wird. Der weitere Preform wird durch translatorische Bewegungen aus der weiteren Teilvorform herausgehoben und in eine weitere Endlage in der Herstellungsform gebracht, indem der weitere Preform auf die Auflagefläche der Herstellungsform aufgelegt wird. So wird z. B. je eine Teilvorform für die Vorder- und Hinterkante des Rotorblattes bereitgestellt. Das erfindungsgemäße Verfahren beinhaltet auch mindestens eine weitere Teilvorform, mit deren Hilfe ein Preform hergestellt wird, welcher z. B. die Preforms der Vorder- und Hinterkante miteinander verbindet.

Zur Herstellung einer Rotorblattteilschale können daher mehrere Preforms, insbesondere zwei, drei oder jede höhere Anzahl an Preforms verwendet werden. Günstigerweise bedecken die Preforms bereichsweise die gesamte Oberfläche des Rotorblattes, es können aber auch nur kleinere Bereiche der Rotorblattoberfläche, z. B. entlang der Vorder- und Hinterkante des Rotorblattes und speziell des Abschlusssteges von den Preforms bedeckt werden.

Die Aufgabe wird in ihrem zweiten Aspekt durch eine Herstellungsanordnung mit den Merkmalen des Anspruchs 8 erfüllt.

Die Herstellungsanordnung ist insbesondere für die Durchführung eines oder mehrerer der oben genannten Verfahren geeignet.

Die Herstellungsanordnung umfasst wenigstens eine Teilvorform mit einer Vorauflagefläche für einen Preform und eine Herstellungsform mit einer Auflagefläche für eine Rotorblattteilschale sowie einen Schwenkmechanismus an der Teilvorform, mit dem die Teilvorform mit ihrer Vorauflagefläche in eine erste Lage bringbar ist, in der die Vorauflagefläche horizontal ausgerichtet ist, und auf der vorzugsweise im Wesentlichen horizontal ausgerichteten Vorauflagefläche ist der Preform herstellbar ist, und mit dem die Teilvorform in eine zweite Lage schwenkbar ist, in der der Preform hinsichtlich seiner Drehstellung bzw. rotatorischen Ausrichtung im Raum seiner Endlage in der Herstellungsform entspricht. Darüber hinaus weist die Herstellungsanordnung einen Translationsmechanismus bzw. Vorrichtung auf, mit dem der Preform aus der zweiten Lage der Teilvorform durch rein translatorische Bewegungen in eine Endlage auf der Auflagefläche der Herstellungsform verbringbar ist.

Erfindungswesentlich bei der Herstellungsanordnung ist, dass der Preform separat, das heißt außerhalb der Herstellungsform für die Rotorblatthalbschale hergestellt wird und die Ausrichtung des Preforms durch voneinander getrennte Dreh- und Translationsbewegungen erfolgt. Die Drehausrichtung des Preforms erfolgt mittels eines Schwenkmechanismus an der Teilvorform, während die Translationsbewegung mittels eines separaten Translationsmechanismus bzw. einer Vorrichtung erfolgt. Dabei kann es sich um einen Hebe-/Senkmechanismus, beispielsweise Seile, handeln, die über Rollen geführt sind und deren Enden an dem Preform vorübergehend befestigt werden, sowie um einen horizontalen Verfahrmechanismus. Hierbei kann es sich beispielsweise um einen Läufer handeln, der auf Schienen horizontal hin und her verfahrbar ist. Es sind natürlich auch andere Ausgestaltungen eines Translationsmechanismus denkbar.

In einer besonders vorteilhaften Ausprägung des erfindungsgemäßen Verfahrens besteht der Translationsmechanismus aus einem Stahlrohrfachwerk mit Auslegern, welches die Oberfläche des Preforms im Wesentlichen horizontal überspannt. An diesem Stahlrohrfachwerk sind vertikal Seile, Ketten oder Stangen angebracht, die in ihrer vertikalen Position bzw. Länge so einstellbar sind, dass sie alle gleichzeitig die Oberfläche des Preforms berühren. An diesen vertikalen Elementen sind Haltevorrichtungen montiert, z. B. Vakuumteller oder Nadelgreifer, die geeignet sind, den Preform aus der Teilvorform zu heben. Dabei ist die Anzahl der vertikalen Elemente und der Haltevorrichtungen auf das Gewicht des Preforms abgestimmt. Zusätzlich sind an dem Stahlrohrfachwerk Sicherungselemente, z. B. Gurte angebracht, die nach dem Herausheben des Preforms aus der Teilvorform um den Preform gelegt werden, um diesen im Falle eines Versagens der Haltevorrichtungen auffangen zu können. Der Translationsmechanismus kann mittels eines Deckenkranes bewegt werden und wird über diesen mit Elektrizität versorgt, um die erforderlichen Subsysteme für die Halteeinrichtungen, z. B. Vakuumgebläse und/oder Druckluft, die auf dem Translationsmechanismus montiert sind, mit Energie zu versorgen. Vorzugsweise weist die Teilvorform eine maximale Steigung des größten Teils der Vorauflagefläche in der ersten Lage von höchstens 50°, vorzugsweise von höchstens 40°, besonders bevorzugt von höchstens 30° auf, während die Teilvorform eine maximale Steigung der Vorauflagefläche in der zweiten Lage von mindestens 70°, vorzugsweise von mindestens 80°, besonders bevorzugt bis 90° aufweist.

Besonders bevorzugt weist die Herstellungsanordnung wenigstens eine weitere Teilvorform auf, in der wenigstens ein weiterer Preform herstellbar ist, sowie wenigstens einen weiteren Translationsmechanismus, der allerdings auch mit dem Translationsmechanismus zusammenfallen kann; wobei der weitere Translationsmechanismus vorgesehen ist, um den wenigstens einen weiteren Preform durch translatorische Bewegung aus einer weiteren ersten in eine weitere zweite Lage zu überführen. In der weiteren zweiten Lage, die der zweiten Lage des Preforms entspricht, hat der weitere Preform hinsichtlich seiner Drehstellung seine zweite Endlage angenommen. Der weitere Preform kann daher ohne weitere Drehbewegung aus der weiteren Teilvorform in die ihm zugeordnete Stelle in der Herstellungsform platziert werden.

Es kann vorteilhaft sein, für jeden Preform eine individuelle Translationsvorrichtung vorzuhalten. Das erfindungsgemäße Verfahren schließt aber ebenso die Möglichkeit ein, dass die vertikalen Elemente der einen Translationsvorrichtung derart verstellbar sind, dass diese für das Verbringen von mehreren Preforms von der jeweiligen Teilvorform in die Herstellungsform geeignet ist und eingesetzt werden kann.

Die Erfindung wird anhand eines Ausführungsbeispiels in sechs Figuren beschrieben. Dabei zeigen:
- Fig. 1: eine schematische seitliche Ansicht einer Teilvorform mit einem Preform in einer ersten Lage,
- Fig. 2: die Teilvorform mit Preform in einer zweiten Lage mit Translationseinrichtung,
- Fig. 3: eine Herstellungsform mit Translationseinrichtung und in die Herstellungsform eingelegtem ersten Preform,
- Fig. 4: einen weiteren Preform in einer weiteren ersten Lage der Teilvorform, wobei die Teilvorform nicht dargestellt ist,
- Fig. 5: den weiteren Preform in einer weiteren zweiten Lage der Teilvorform, wobei die Teilvorform nicht dargestellt ist,
- Fig. 6: den weiteren Preform in der weiteren Endlage in der Herstellungsform, wobei die Herstellungsform nicht dargestellt ist.

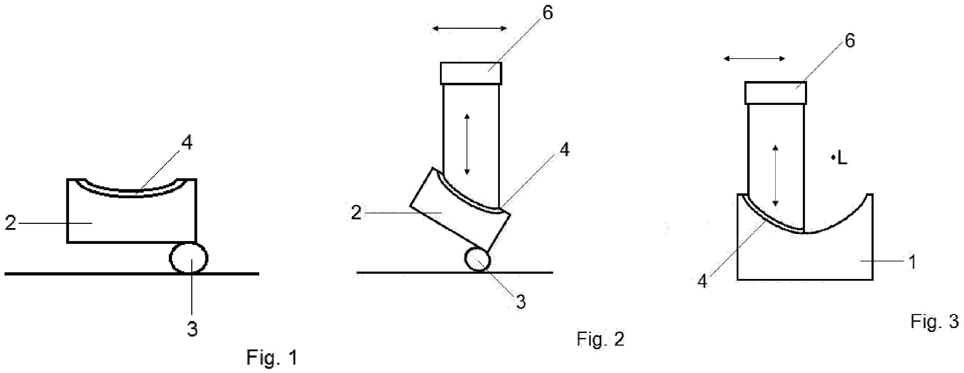

In den Figuren 1, 2 und 3 ist eine erfindungsgemäße Herstellungsanordnung dargestellt. Die Herstellungsanordnung umfasst eine in Fig. 3 dargestellte Herstellungsform 1 für eine Rotorblatthalbschale in einem Querschnitt senkrecht zu einer Längsrichtung L des Rotorblattes sowie eine erste Teilvorform 2, die in Fig. 1 und 2 dargestellt ist. In der Fig. 1 ist die Teilvorform 2 in einer ersten Lage und in Fig. 2 in einer zweiten Lage dargestellt. Die Teilvorform 2 ist um eine Achse 3 schwenkbar gelagert. Dafür ist ein nicht dargestellter, hydraulischer, pneumatischer und gegebenenfalls auch elektrischer Antrieb vorgesehen.

Natürlich ist zur Herstellung eines vollständigen Rotorblattes auch noch eine weitere Herstellungsanordnung mit zumindest einer weiteren Herstellungsform notwendig, in der die komplementäre Rotorblatthalbschale hergestellt werden kann.

In der Vorform 2 wird ein Preform 4 hergestellt, während in der Herstellungsform 1 - der eigentlichen Hauptform - der Preform 4 mit weiteren (nicht dargestellten) Preforms, die in weiteren (nicht dargestellten) Teilvorformen hergestellt werden, sowie weiteren Gewebe- bzw. Gelegelagen und weiteren Sandwichmaterialien und weiteren vorgefertigten und ausgehärteten Faserverbundbauteilen (z. B. die Gurte) zusammengestellt wird und die Rotorblatthalbschale in einem Laminierverfahren aus den Preforms 4 und den weiteren oben aufgeführten Komponenten gefertigt wird.

Die Herstellungsform 1 gemäß Fig. 3 stellt exemplarisch eine Herstellungsform 1 dar, in der eine Rotorblatthalbschale oder eine Rotorblattteilschale oder andere Abschnitte und Bereiche einer Rotorblattschale hergestellt werden.

Wesentlich für die Erfindung ist, dass einige Bereiche der Herstellungsform 1 sehr steil beinahe oder sogar exakt senkrecht gegenüber dem Erdboden verlaufen. In der Herstellungsform 1 für eine Rotorblatthalbschale in Fig. 3 sind dieses die Bereiche, die in Fig. 3 rechts und links angeordnet sind, also die Bereiche entlang der Rotorblattnase und der Rotorblatthinterkante.

Beim Herstellen der Rotorblatthalbschale in herkömmlicher Weise im Laminierverfahren werden zunächst mehrere Schichten, bspw. faserhaltige Gewebelagen, faserhaltige Gelegelagen, Schäume, Balsa usw. übereinander- und/oder nebeneinandergelegt. Insbesondere die Gewebe- und Gelegelagen, aber auch die anderen Lagen sind zunächst trocken und rutschen daher leicht übereinander weg. Insbesondere an den senkrechten Bereichen der Rotorblattnase und der Rotorblatthinterkante der Herstellungsform 1 gemäß Fig. 3 sind daher Maßnahmen zu treffen, damit die übereinandergeschichteten Lagen nicht zum Zentrum der Herstellungsform 1 verrutschen. Die Lagen müssen beispielsweise mit Klebmittel zunächst provisorisch miteinander verklebt werden. Es können gegebenenfalls auch andere Fixierhilfen verwendet werden. Zur Vermeidung dieser Maßnahmen ist die Teilvorform 2, die in Fig. 1 und Fig. 2 dargestellt ist, vorgesehen. Die Teilvorform 2 ist zur Fertigung eines in der Herstellungsform 1 weitestgehend senkrechten, jedoch zumindest sehr steilen, die Rotorblattteilschale umfassenden Bereiches vorgesehen. In Fig. 1 ist das beispielsweise die Rotorblattnase. Es kann sich bei der Teilvorform 2 auch um die Teilvorform 2 zur Herstellung der Rotorblatthinterkante handeln. Insbesondere moderne Rotorblätter weisen eine nicht mehr flach auslaufende Rotorblatthinterkante, sondern zumindest im Wurzelbereich einen Hinterkantenabschlusssteg 20 auf, der im Wesentlichen senkrecht zu einer Rotorblattsehne des Rotorblattes verläuft. Auch zur Herstellung eines Rotorblatthinterkantenabschlusssteges ist es daher grundsätzlich notwendig, wenn dieser gleichzeitig und zusammenhängend mit einer Rotorblatthalbschale gefertigt wird, die einzelnen Lagen, die weitestgehend senkrecht, zumindest sehr steil verlaufen, für das Laminierverfahren nebeneinander anzuordnen und zur Vermeidung des Verrutschens der Lagen vorab relativ zueinander und zur Herstellungsform hin zu fixieren.

Die Erfindung macht von der Idee Gebrauch, Bereiche der Rotorblattteilschalen als Preforms 4 separat zu fertigen und die zur Herstellung der steilen Bereiche der Rotorblatthalbschale benötigten Teilvorformen 2 schwenkbar auszugestalten. Dadurch ist es möglich, u. a. den ersten Preform 4 in einer Lage vorzufertigen, die im Wesentlichen horizontal ausgerichtet ist. Die einzelnen Lagen des Laminates können daher gegenüber dem Erdboden weitestgehend waagerecht übereinandergeschichtet werden, so dass die Gefahr eines Verrutschens der Lagen gegeneinander nicht mehr besteht.

In Fig. 1 ist die Teilvorform 2 zur Herstellung des Preforms 4, in diesem Falle der Rotorblattnase, in einer ersten horizontalen Lage dargestellt. Unter 'horizontal' ist dabei eine Lage zu verstehen, bei der die Steigung der Vorauflagefläche höchstens 30°, vorzugsweise höchstens 20°, besonders bevorzugt höchstens 10° oder jede Gradzahl zwischen diesen angegebenen Gradzahlen oder noch weniger Grad beträgt. Es ist also nicht notwendig, dass jeder Bereich der Vorauflagefläche streng horizontal ausgebildet oder angeordnet ist. Die Gradzahl der höchsten Steigung der Vorauflagefläche hängt auch davon ab, welche Materialien zur Fertigung des Preforms 4 verwendet werden. Die Steigung sollte so gewählt werden, dass bei einem Aufeinanderliegen der Lagen des Laminates im trockenen Zustand die Reibung zwischen den Lagen groß genug ist, um ein selbsttätiges Verrutschen der Lagen gegeneinander zu verhindern.

Die trockenen Lagen werden gemäß Fig. 1 in der Teilvorform 2 zu einem Halbzeug vorgefertigt, d. h. die Lagen werden mit einem Klebstoff versehen und unter Vakuum erwärmt (bei Preforms der Variante B ohne Erwärmen) und somit miteinander verklebt, ohne dass es für diesen Vorgang einer Vorabfixierung der Lagen gegeneinander bedarf oder gegenüber der Teilvorform.

Es ist jedoch auch denkbar, dass der Preform 4 bereits vollständig laminiert wird, indem zur Herstellung des Preforms 4 in die Teilvorform 2 mehrere Schichten beispielsweise faserhaltige Gewebelagen, faserhaltige Gelegelagen, Schäume, Balsa usw. übereinanderund/oder nebeneinandergelegt werden. Die so angeordneten Schichten bilden ein vorzugsweise trockenes Halbzeug aus. Das Halbzeug wird in Verfahren wie beispielsweise dem "resin injection moulding" (RIM Verfahren) oder "resin transfer moulding" (RTM Verfahren) mit einem Harzsystem fundiert. Das Harzsystem härtet in einer zunächst exothermen, chemischen Reaktion und anschließender Wärmezufuhr innerhalb des Halbzeugs aus. Dem harzgetränkten Halbzeug wird, nachdem es in der exothermen Reaktion einen sogenannten exothermen Peak durchschritten hat, extern Wärme zugeführt, um es auf einer niedrigen Prozesstemperatur zu halten. Auf der Prozesstemperatur härtet das Harzsystem dann vollständig aus und vernetzt. Üblicherweise wird das Halbzeug in der vorgegebenen Schichtung auf der Vorauflagefläche der Teilvorform 2 positioniert und nach der vollständigen Schichtung mit einer Vakuumfolie an den Rändern der Teilvorform 2 abgedichtet. Die Vakuumfolie und/oder Teilvorform 2 weisen mehrere Zuführungen und Abführungen auf, durch die das flüssige Harzsystem in das Halbzeug hineingesogen werden kann. Bei dem Harzsystem handelt es sich vorzugsweise um einen Zwei-Komponenten-Kleber.

Der vorgefertigte Preform 4 wird zunächst durch Verschwenken der Teilvorform 2 gemäß Fig. 2 in eine Position gebracht, die hinsichtlich der drei Drehachsen exakt der Position entspricht, die der Preform 4 in der Herstellungsform 1 aufweisen wird. Erst nachdem die Teilvorform 2 in die zweite Lage verschwenkt wurde, wird der Preform 4 mit einer Translationseinrichtung 6 verbunden. Bei der Translationseinrichtung 6 handelt es sich um eine kombinierte Hebe-Nerfahreinrichtung, mit der der Preform 4 aus der Teilvorform 2 zunächst senkrecht zum Erdboden herausgehoben, dann parallel zum Erdboden über die Herstellungsform 1 verfahren und anschließend über der Herstellungsform 1 wiederum senkrecht zum Erdboden in die Herstellungsform 1 hinein abgesenkt werden kann, bis der Preform 4 Kontakt mit der Auflagefläche der Herstellungsform 1 gemäß Fig. 3 aufweist. Günstig in diesem Verfahren ist, dass das problematische Drehen bzw. Verschwenken des Preforms 4 nicht mehr mittels einer Translationseinrichtung 6 selbst zu erfolgen braucht, sondern gesichert und gut gestützt in der Teilvorform 2 erfolgt.

Zur Herstellung der vollständigen Rotorblatthalbschale kann dann bspw. ein weiterer Preform in einer weiteren Teilvorform hergestellt werden, der dann in einer analogen Weise mit derselben Translationseinrichtung 6 oder einer anderen Translationseinrichtung aus der weiteren Teilvorform angehoben, verfahren und abgesenkt werden kann. Der Preform 4 und der weitere Preform würden dann, beispielsweise entlang eines Abschnitts der Rotorblattnase und entlang eines Abschnitts der Rotorblatthinterkante, senkrecht zur Längsrichtung L nebeneinander bzw. überlappend positioniert werden und zusammen mit weiteren Faserlagen und weiterem Sandwichmaterial eine Rotorblatthalbschale ausbilden. Die beiden Preforms 4 werden zusammen mit den weiteren Faserlagen und weiterem Sandwichmaterial miteinander in einem Laminierverfahren in der Herstellungsform 1 zur Rotorblatthalbschale zusammenlaminiert, soweit der Laminiervorgang in der Teilvorform 2 noch nicht vollständig durchgeführt wurde, die Lagen insbesondere nur miteinander fixiert wurden.

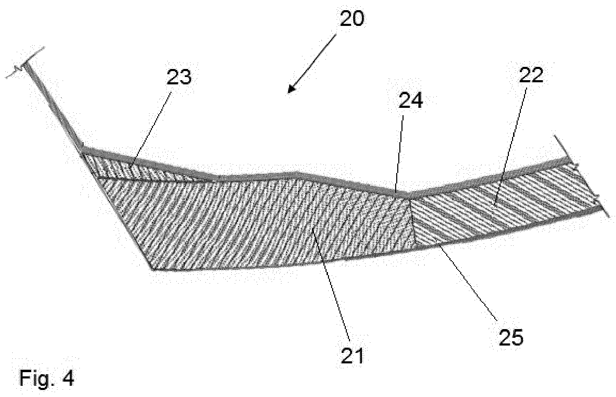

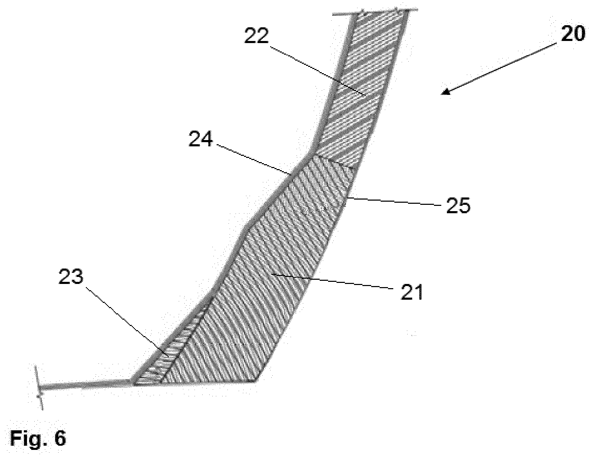

In den Fig. 4, 5 und 6 ist der Hinterkantenabschlusssteg 20 dargestellt. Der Hinterkantenabschlusssteg 20 ist in seiner tatsächlichen räumlichen Stellung dargestellt. Der Hinterkantenabschlusssteg 20 umfasst ein erstes und ein zweites Kernmaterial 21, 22, die nebeneinander angeordnet sind sowie eine innen an das erste Kernmaterial 21 angesetzte Innenleiste 23. Der Hinterkantenabschlusssteg 20 ist rotorblattinnenseitig und -außenseitig von einer Innenhaut 24 bzw. einer Außenhaut 25 überzogen. Bei den Kernmaterialien 21, 22 kann es sich um einen ersten und einen zweiten Schaum handeln, es sind jedoch auch andere Kernmaterialien 21, 22 denkbar.

In der Fig. 4 ist die Anordnung des ersten Kernmaterials 21 und des zweiten Kernmaterials 22 sowie der Innenhaut 24 und Außenhaut 25 in der ersten Lage in der ersten Teilvorform 2 dargestellt. Die Teilvorform 2 selbst ist nicht dargestellt. Dabei ist deutlich zu erkennen, dass das erste Kernmaterial 21 und das zweite Kernmaterial 22 im Wesentlichen horizontal nebeneinander angeordnet sind. Des Weiteren ist die Innenleiste 23 senkrecht zum Erdboden oberhalb des ersten Kernmaterials 21 angeordnet Die Innenleiste 23, das erste Kernmaterial 21 und das zweite Kernmaterial 22 sind von der Innenhaut 24 abgedeckt, die eine ebenfalls im Wesentlichen horizontale Ausrichtung aufweist. Auch hier ist unter horizontal zu verstehen, dass die höchste Steigung gegenüber dem Erdboden höchsten 30°, vorzugsweise höchstens 20° beträgt.

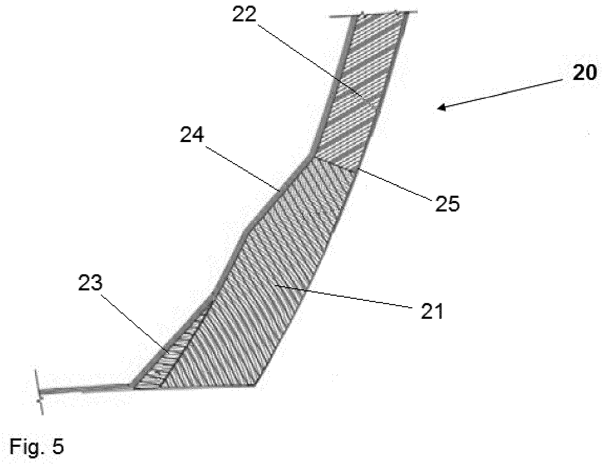

Der Hinterkantenabschlusssteg 20 gemäß Fig. 4 wird zu einem Preform nach Variante A oder B geformt. Der Hinterkantenabschlusssteg 20 wird dann in seine zweite Lage gemäß Fig. 5 entgegen dem Uhrzeigersinn verschwenkt. Die Drehbewegung entspricht also nicht der in den Fign. 1 und 2 dargestellten Drehbewegung, sondern einer entgegengesetzten Drehbewegung. Der in die zweite Lage gemäß Fig. 5 verschwenkte Hinterkantenabschlusssteg 20 wird dann mittels der in den Fign. 2 und 3 dargestellten Translationseinrichtung 6 angehoben und dann aus einer Position oberhalb der weiteren Teilvorform in eine Position oberhalb der Herstellungsform 1, verfahren und aus seiner Position oberhalb der Herstellungsform 1 auf die Herstellungsform 1 herabgesenkt, bis der Hinterkantenabschlusssteg 20 Kontakt mit der Auflagefläche der Herstellungsform 1 aufweist. Die Bezeichnungen "oberhalb" und "unterhalb" sind hier wie auch in der gesamten Anmeldung im Verhältnis zum Erdboden zu verstehen.

Der Hinterkantenabschlusssteg 20 kann dann auf den in der Herstellungsform 1 bereits gefertigten oder in die Herstellungsform 1 ebenfalls hineingehobenen Preform 4 aufgelegt oder neben dem Preform 4 positioniert und dann mit ihm und weiteren Faserlagen und/oder Sandwichmaterial zusammenlaminiert werden. Grundsätzlich ist natürlich denkbar, dass beim Aufbringen mehrerer Preforms 4 auf die Herstellungsform 1 die Preforms 4 nicht alle unmittelbar vollständig auf die Auflagefläche der Herstellungsform 1 aufgelegt werden, sondern dass es auch zu Überlappungen kommen kann oder auch einzelne Preforms 4 vollständig oder größtenteils auf einer Innenseite bereits aufgelegter Preforms 4 aufgelegt werden können.

### Bezuaszeichenliste

- 1: Herstellungsform
- 2: Teilvorform
- 3: Achse
- 4: Preform

- 6: Translationseinrichtung

- 20: Hinterkantenabschlusssteg
- 21: erstes Kernmaterial
- 22: zweites Kernmaterial
- 23: Innenleiste
- 24: Innenhaut
- 25: Außenhaut

- L: Längsrichtung

## Patentansprüche

1. Verfahren zur Herstellung einer Rotorblattteilschale, indem
wenigstens eine Teilvorform (2) mit einer Vorauflagefläche und eine Herstellungsform (1) mit einer Auflagefläche für die Rotorblattteilschale zur Verfügung gestellt werden und
die Teilvorform (2) mit ihrer Vorauflagefläche in eine erste Lage gebracht wird, in der die Vorauflagefläche horizontal ausgerichtet wird, und
auf der horizontal ausgerichteten Vorauflagefläche ein Preform (4) hergestellt wird, die Teilvorform (2) in eine zweite Lage verschwenkt wird, in der der Preform (4) hinsichtlich seiner Drehstellung einer Endlage in der Herstellungsform (1) entspricht, und der Preform (4) durch translatorische Bewegungen aus der zweiten Lage der Teilvorform (2) in eine Endlage in der Herstellungsform (1) verbracht wird und der Preform (4) auf die Auflagefläche der Herstellungsform (1) aufgelegt wird, **dadurch gekennzeichnet, dass** eine maximale Steigung der Vorauflagefläche gegenüber dem Erdboden in der ersten Lage von höchstens 50° verwendet wird und die Vorauflagefläche konkav ausgebildet wird.

2. Verfahren nach Anspruch 1,
**dadurch gekennzeichnet, dass** eine maximale Steigung der Vorauflagefläche gegenüber dem Erdboden in der ersten Lage von höchstens 40° verwendet wird.

3. Verfahren nach Anspruch 1 oder 2,
**dadurch gekennzeichnet, dass** eine maximale Steigung der Vorauflagefläche in der zweiten Lage von mindestens 70°, vorzugsweise mindestens 80°, vorzugsweise bis zu 90° verwendet wird.

4. Verfahren nach einem der Ansprüche 1 bis 3,
**dadurch gekennzeichnet, dass** auf die Vorauflagefläche Lagen gelegt werden und mit einem Haftmittel versehen werden und unter Wärmezufuhr miteinander verklebt werden.

5. Verfahren nach Anspruch 1 oder 2,
**dadurch gekennzeichnet, dass** die Teilvorform (2) um eine horizontale Achse (3) geschwenkt wird.

6. Verfahren nach einem der Ansprüche 1 oder 2,
**dadurch gekennzeichnet, dass** der Preform (4) von der Auflagefläche der Teilvorform (2) angehoben wird, über die Herstellungsform (1) verbracht wird und auf die Auflagefläche der Herstellungsform (1) herabgelassen wird.

7. Verfahren nach einem der vorstehenden Ansprüche,
**dadurch gekennzeichnet, dass** wenigstens eine weitere Teilvorform (2) zur Verfügung gestellt wird, in der wenigstens ein weiterer Preform (4) hergestellt wird,
der weitere Preform (4) durch translatorische Bewegung aus der Teilvorform (2) heraus in eine weitere Endlage in der Herstellungsform (1) verbracht wird, indem der weitere Preform (4) auf die Auflagefläche der Herstellungsform (1) aufgelegt wird.

8. Herstellungsanordnung zur Durchführung eines der Verfahren nach den Ansprüchen 1 bis 7,
mit wenigstens einer Teilvorform (2) mit einer Vorauflagefläche für einen Preform (4) und einer Herstellungsform (1) mit einer Auflagefläche für eine Rotorblattteilschale und einem Schwenkmechanismus an der Teilvorform (2), mit dem die Teilvorform (2) mit ihrer Vorauflagefläche in eine erste Lage bringbar ist, in der die Vorauflagefläche horizontal ausgerichtet ist, wobei
auf der horizontal ausgerichteten Vorauflagefläche der Preform (4) herstellbar ist, und mit dem die Teilvorform (2) in eine zweite Lage schwenkbar ist, in der der Preform (4) hinsichtlich seiner Drehstellung einer Endlage in der Herstellungsform (1) entspricht, und einem Translationsmechanismus, mit dem der Preform (4) aus der zweiten Lage der Teilvorform (2) in eine Endlage auf der Auflagefläche der Herstellungsform (1) verbringbar ist, wobei die Teilvorform (2) eine maximale Steigung der Vorauflagefläche gegenüber dem Erdboden in der ersten Lage von höchstens 50° aufweist und die Vorauflagefläche konkav ausgebildet ist.

9. Herstellungsanordnung nach Anspruch 8,
**dadurch gekennzeichnet, dass** die Teilvorform (2) eine maximale Steigung der Vorauflagefläche gegenüber dem Erdboden in der ersten Lage von höchstens 40° aufweist.

10. Herstellungsanordnung nach Anspruch 8 oder 9,
**dadurch gekennzeichnet, dass** die Teilvorform (2) eine maximale Steigung der Vorauflagefläche in der zweiten Lage von mindestens 70°, vorzugsweise mindestens 80° aufweist.

11. Herstellungsanordnung nach Anspruch 8, 9 oder 10,
**gekennzeichnet durch** wenigstens eine weitere Teilvorform (2), in der wenigstens ein weiterer Preform (4) herstellbar ist, wenigstens einem weiteren Translationsmechanismus, mit dem
der wenigstens eine weitere Preform (4) durch translatorische Bewegung aus der wenigstens einen weiteren Teilvorform (2) heraus in eine Endlage in der Herstellungsform (1) verbringbar ist, wobei der weitere Preform (4) auf der Auflagefläche der Herstellungsform (1) aufliegt.

## Claims

1. Method for producing a rotor blade half-shell by at least one partial pre-mould (2) being provided with a preliminary support surface and a production mould (1) being provided with a support surface for the rotor blade half-shell, and the partial pre-mould (2) with its preliminary support surface being moved into a first position in which the preliminary support surface being oriented horizontally, and a preform (4) being produced on the horizontally oriented preliminary support surface, the partial pre-mould (2) being pivoted into a second position in which the preform (4), in terms of its rotational position, corresponds to an end position in the production mould (1), and the preform (4) being moved by translational movements out of the second position of the partial pre-mould (2) into an end position in the production mould (1) and the preform (4) being placed onto the support surface of the production mould (1), **characterised in that** a maximum slope of the preliminary support surface relative to the ground in the first position of at most 50° is used and the preliminary support surface is formed concave.

2. Method according to claim 1, **characterised in that** a maximum slope of the preliminary support surface relative to the ground in the first position of at most 40° is used.

3. Method according to claim 1 or 2, **characterised in that** a maximum slope of the preliminary support surface in the second position of at least 70°, preferably of at least 80°, preferably of up to 90° is used.

4. Method according to any one of claims 1 to 3, **characterised in that** layers are laid onto the preliminary support surface and are provided with an adhesive and are adhered to one another while heat is supplied.

5. Method according to claim 1 or 2, **characterised in that** the partial pre-mould (2) is pivoted about a horizontal axis (3).

6. Method according to any one of claims 1 or 2, **characterised in that** the preform (4) is lifted off from the support surface of the partial pre-mould (2), moved above the production mould (1) and set down onto the support surface of the production mould (1).

7. Method according to any one of the preceding claims, **characterised in that** at least one further partial pre-mould (2) is provided in which at least one further preform (4) is produced, the further preform (4) is moved by translational movement out of the partial pre-mould (2) into a further end position in the production mould (1), by placing the further preform (4) onto the support surface of the production mould (1).

8. Production arrangement for carrying out one of the methods according to claims 1 to 7, comprising at least one partial pre-mould (2) with a preliminary support surface for a preform (4) and a production mould (1) with a support surface for a rotor blade half-shell and a pivoting mechanism on the partial pre-mould (2) by which the partial pre-mould (2) with its preliminary support surface can be moved into a first position in which the preliminary support surface is oriented horizontally, wherein the preform (4) can be produced on the horizontally oriented preliminary support surface, and by which the partial pre-mould (2) can be pivoted by the pivoting mechanism into a second position in which the preform (4), in terms of its rotational position, corresponds to an end position in the production mould (1), said production arrangement also comprising a translation mechanism by which the preform (4) can be moved out of the second position of the partial pre-mould (2) into an end position on the support surface of the production mould (1), wherein the partial pre-mould (2) has a maximum slope of the preliminary support surface relative to the ground in the first position of at most 50° and the preliminary support surface is concave.

9. Production arrangement according to claim 8, **characterised in that** the partial pre-mould (2) has a maximum slope of the preliminary support surface relative to the ground in the first position of at most 40°.

10. Production arrangement according to claim 8 or 9, **characterised in that** the partial pre-mould (2) has a maximum slope of the preliminary support surface in the second position of at least 70°, preferably at least 80°.

11. Production arrangement according to claim 8, 9 or 10, **characterised by** at least one further partial pre-mould (2) in which at least one further preform (4) can be produced, at least one further translation mechanism by which
the at least one further preform (4) can be moved by translational movement out of the at least one further partial pre-mould (2) into an end position in the production mould (1) and the further preform (4) rests on the support surface of the production mould (1).

## Revendications

1. Procédé pour la fabrication d'une coque partielle de pale de rotor,
cependant qu'au moins une préforme partielle (2) avec une surface d'appui de préforme et une forme de fabrication (1) avec une surface d'appui pour la coque partielle de pale de rotor sont mises à disposition et
la préforme partielle (2) avec sa surface d'appui de préforme est mise dans une première position dans laquelle la surface d'appui de préforme est orientée horizontalement et une préforme (4) est fabriquée sur la surface d'appui de préforme orientée horizontalement, la préforme partielle (2) est pivotée dans une seconde position dans laquelle la préforme (4) correspond pour ce qui est de sa position de rotation à une position terminale dans la forme de fabrication (1) et la préforme (4) passe à une position terminale dans la forme de fabrication (1) par des mouvements de translation à partir de la seconde position de la préforme partielle (2) et la préforme (4) repose sur la surface d'appui de la forme de fabrication (1),
**caractérisé en ce qu'**une inclinaison maximale de la surface d'appui de préforme est utilisée par rapport à la terre dans la première position de 50° maximum et que la surface d'appui de préforme est de configuration concave.

2. Procédé selon la revendication 1,
**caractérisé en ce qu'**une inclinaison maximale de la surface d'appui de préforme est utilisée par rapport à la terre dans la première position de 40° maximum.

3. Procédé selon la revendication 1 ou 2,
**caractérisé en ce qu'**une inclinaison maximale de la surface d'appui de préforme est utilisée dans la seconde position d'au moins 70°, de préférence d'au moins 80°, de préférence jusqu'à 90°.

4. Procédé selon l'une des revendications 1 à 3, **caractérisé en ce que** des couches sont posées sur la surface d'appui de préforme et sont pourvues d'un moyen adhésif et sont collées ensemble avec apport de chaleur.

5. Procédé selon la revendication 1 ou 2, **caractérisé en ce que** la préforme partielle (2) est pivotée autour d'un axe horizontal (3).

6. Procédé selon l'une des revendications 1 ou 2, **caractérisé en ce que** la préforme (4) est soulevée de la surface d'appui de la préforme partielle (2), passe au-dessus de la forme de fabrication (1) et est abaissée sur la surface d'appui de la forme de fabrication (1).

7. Procédé selon l'une des revendications précédentes, **caractérisé en ce qu'**au moins une autre préforme partielle (2) est mise à disposition dans laquelle au moins une autre préforme (4) est fabriquée, l'autre préforme (4) passe de la préforme partielle (2) par un mouvement de translation à une autre position terminale dans la forme de fabrication (1), l'autre préforme (4) reposant sur la surface d'appui de la forme de fabrication (1).

8. Agencement de fabrication pour exécuter l'un des procédés selon les revendications 1 à 7,
avec au moins une préforme partielle (2) avec une surface d'appui pour une préforme (4) et une forme de fabrication (1) avec une surface d'appui pour une coque partielle de pale de rotor et un mécanisme de pivotement sur la préforme partielle (2) avec lequel la préforme partielle (2) avec sa surface d'appui de préforme peut être amenée dans une première position dans laquelle la surface d'appui de préforme est orientée horizontalement, cependant que la préforme (4) peut être fabriquée sur la surface d'appui de préforme orientée horizontalement et avec lequel la préforme partielle (2) peut être pivotée dans une seconde position dans laquelle la préforme (4) correspond, pour ce qui est de sa position de rotation, à une position terminale dans la forme de fabrication (1), et un mécanisme de translation avec lequel la préforme (4) peut passer de la seconde position de la préforme partielle (2) à une position terminale sur la surface d'appui de la forme de fabrication (1), la préforme partielle (2) présentant une inclinaison maximale de la surface d'appui de préforme par rapport à la terre dans la première position de 50° maximum et la surface d'appui de préforme étant de configuration concave.

9. Agencement de fabrication selon la revendication 8, **caractérisé en ce que** la préforme partielle (2) présente une inclinaison maximale de la surface d'appui de préforme par rapport à la terre dans la première position de 40° maximum.

10. Agencement de fabrication selon la revendication 8 ou 9, **caractérisé en ce que** la préforme partielle (2) présente une inclinaison maximale de la surface d'appui de préforme dans la seconde position d'au moins 70°, de préférence d'au moins 80°.

11. Agencement de fabrication selon la revendication 8, 9 ou 10, **caractérisé par** au moins une autre préforme partielle (2) dans laquelle au moins une autre préforme (4) peut être fabriquée, au moins un autre mécanisme de translation avec lequel la au moins une autre préforme (4) passe de la au moins une autre préforme partielle (2) par un mouvement de translation dans une autre position terminale dans la forme de fabrication (1), l'autre préforme (4) reposant sur la surface d'appui de la forme de fabrication (1).
